# EUROPEAN PATENT SPECIFICATION

(11) **EP 1 296 791 B1**
(45) Date of publication and mention of the grant of the patent: **16.01.2008**
(21) Application number: 01944051.0
(22) Date of filing: 21.06.2001
(51) Int. Cl.: B23B 51/00

(54) **ROTATABLE TOOL HAVING A REPLACEABLE TIP AT THE CHIP REMOVING FREE END OF THE TOOL**
DREHENDES WERKZEUG MIT EINEM ERSETZBAREN SCHNEIDEINSATZ AN EINEM ENDE
OUTIL ROTATIF COMPORTANT UNE POINTE INTERCHANGEABLE AU NIVEAU DE L'EXTREMITE LIBRE D'ENLEVEMENT DE COPEAUX DE L'OUTIL

(30) Priority: 06.07.2000 SE 0254000
(43) Date of publication of application: 02.04.2003
(73) Proprietor: Sandvik Intellectual Property AB, 811 81 Sandviken (SE)
(72) Inventor: ERIKSSON, Henrik, S-747 94 Alunda (SE)
(86) International application number: PCT/SE2001/001437
(87) International publication number: WO 2002/002263

(56) References cited:
- EP-A1- 0 118 806
- DE-A1- 19 605 157
- US-A- 5 228 812
- US-A- 6 059 492

## Description

### Technical Field of the Invention

The present invention relates to a rotatable tool having a replaceable tip at the chip removing free end of the tool, the tool also comprising a tool body having a cutting seat, in which the tip is intended to be received, that the tool body has helicoidal or straight chip channels, that the tip has members for chip removing machining, and that the cutting seat and the replaceable tip have mutually co-operating support surfaces extending both in the longitudinal direction of the tool and transversely to the longitudinal direction of the tool and that the cutting seat and the replaceable tip have mutually co-operating guide surfaces which are rotationally symmetrical in respect to a longitudinal centre axis of the tool. Preferably the tool is a drill or a milling cutter.

The invention also relates to the tip separately.

### Prior Art

A tool, in the form of a drill, of the above-defined kind is previously known from the manufacturer Gühring, in which the drill tip is clamped in the cutting seat thereof by means of two screws. One of the screws is a stop screw, the position of which is fixed in the factory, while the second one is a tightening screw, which is fastened manually in connection with the drill tip being assembled in the cutting seat thereof. The tightening screw is provided with a conical tip in order to clamp the loose drill tip in the axial direction of the tool. The cutting seat has parallel side surfaces.

### Aim and Features of the Invention

A primary aim of the present invention is to provide a tool of the above-defined kind, where the replaceable tip is assembled in the cutting seat thereof in the tool body in a simple and user-friendly way.

Another aim of the present invention is that the tool should be balanced as regards the forces acting on the tool.

Yet another aim of the present invention is that the cutting forces should act towards the centre and clamp the cutting insert.

At least the primary aim of the present invention is realised by means of a tool and a tip having the features defined in the subsequent independent claims.

### Further elucidation of the prior art

US 6 059 492 discloses a rotatable tool comprising a replaceable tip at the chip removing free end of the tool as well as a tool body having a cutting seat in which the tip is intended to be received. The tool body has helicoidal or straight chip channels, the tip has members for chip removing machining and the cutting seat and the replaceable tip have mutually co-operating support surfaces extending both in the longitudinal direction of the tool and transversely to the longitudinal direction of the tool. The cutting seat and the replaceable tip have mutually co-operating guide surfaces which are rotationally symmetrical with respect to the longitudinal centre axis of the tool, as well as members for clamping the replaceable tip, when the same is assembled in the cutting seat in the axial direction of the tool. A locking pin is resiliently mounted in the tool body so that when the replaceable tip is twisted into position in the cutting seat and the support surface and brought into contact with the support surface, the locking pin enters a receptacle and locks the tip in position.

DE 196 05 157 discloses a rotatable tool with an internally threaded hole in a tool body, a truncated cone in a replaceable tip, and a screw which is applied through the hole and the cone.

In contrast to the teaching of US 6059492 and DE 19605157 the locking screw of the present invention has a double function, that is to say it not only locks the tip in the required location but also, and prior to that, it twists the tip into the required location where the co-operating support surfaces of the replaceable tip and insert seat secure the tip in the axial direction. Thereby the support surfaces form an acute angle to the longitudinal centre axis of the tool.

### Short Description of the Drawings

Below a preferred embodiment of a drill and a drill tip according to the present invention will be described, reference being made to the accompanying drawings, where:
- Fig 1: shows a perspective view of a drill according to the present invention;
- Fig 2: shows a perspective view, obliquely from above, of the cutting seat in the drill body, a replaceable drill tip being intended to be received in the cutting seat;
- Fig 3: also shows a perspective view, obliquely from above, of the cutting seat in the drill body according to Fig 2, the cutting seat in Fig 3 being regarded more in an end view than in Fig 2;
- Fig 4: shows a side view of the cutting seat in the drill body;
- Fig 5: shows a perspective view, obliquely from above, of the replaceable drill tip according to the present invention;
- Fig 6: shows a view from below of the replaceable drill tip according to Fig 5;
- Fig 7: shows a perspective view from the side of the drill body, wherein a replaceable drill tip being assembled in the cutting seat;
- Fig 8: shows a planar view of the stage of the assembly of the replaceable drill tip that is shown in Fig 7;

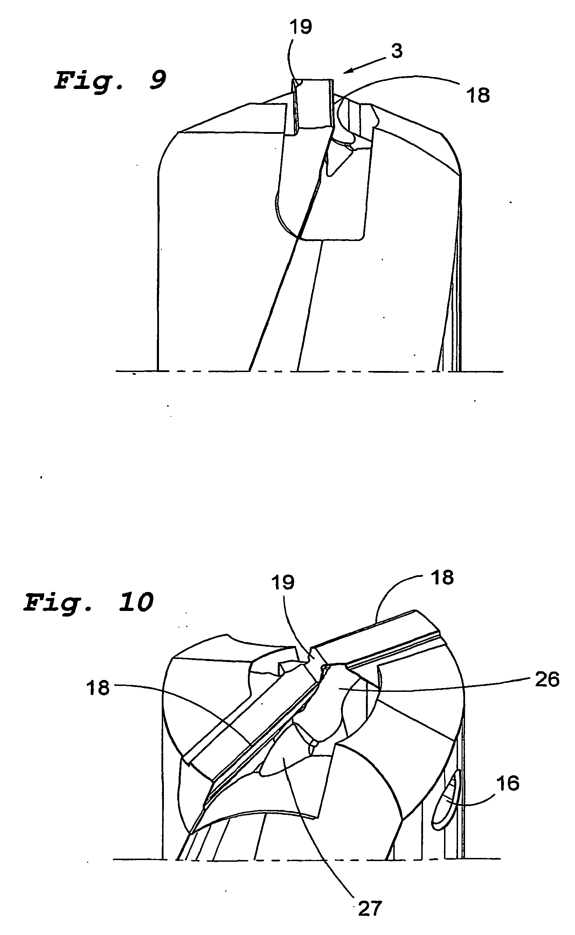

- Fig 9: shows a side view of the drill according to the present invention, i.e. the replaceable drill tip is assembled in the cutting seat of the drill body; and
- Fig 10: shows a perspective view, obliquely from above, of the drill according to Fig 9.

### Reference designations

1) Drill body
2) Centre axis/rotation axis
3) Drill tip
4) -
5) Shank
6) -
7) Chip channels
8) -
9) Cutting seat
10) First support surfaces
11) Central cooling duct
12) Second support surfaces
13) Clearance surface
14) Curved surfaces
15) First circular cylindrical guide surfaces
16) Holes
17) Locking screw
18) cutting edges
19) Cutting tip
20) Third support surface
21) Fourth support surface
22) Second circular cylindrical surfaces
23) Stop face
24) Second cooling duct
25) Third cooling duct
26) Chip release surface
27) Chip release surface

### Detailed Description of a Preferred Embodiment of the Present Invention

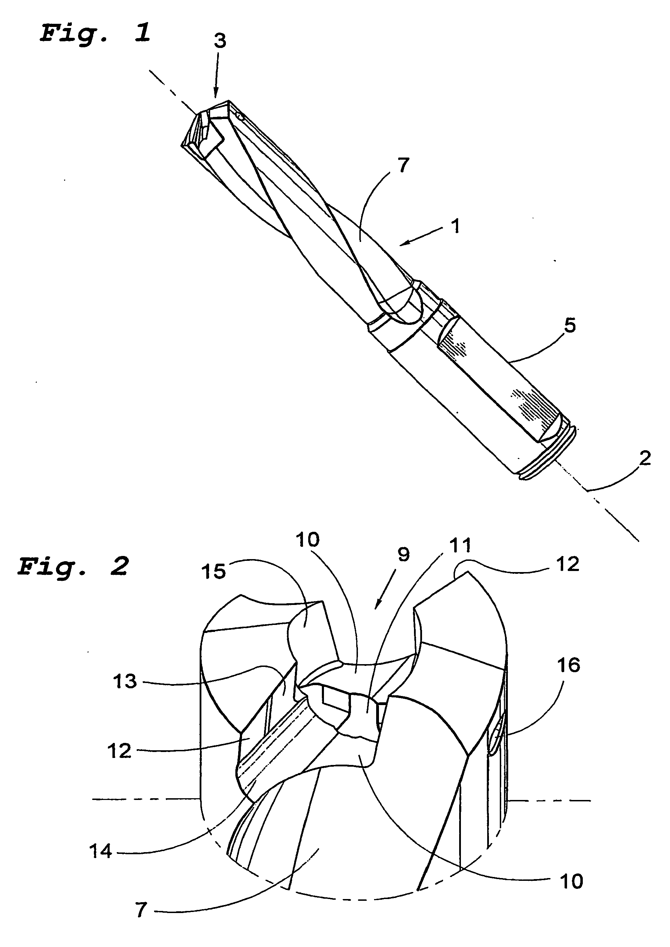

The drill according to the present invention illustrated in Fig 1 comprises a drill body 1 and a replaceable drill tip 3. The drill body 1 is provided with a shank 5 and helicoidal chip channels 7 are arranged in the part of the drill body 1 which is situated between the shank 5 and the replaceable drill tip 3. The shank 5 is intended to be received in a holder in a machine tool. The front surface of the drill body 1, i.e. the surface in which the drill tip 3 is assembled, is generally conical.

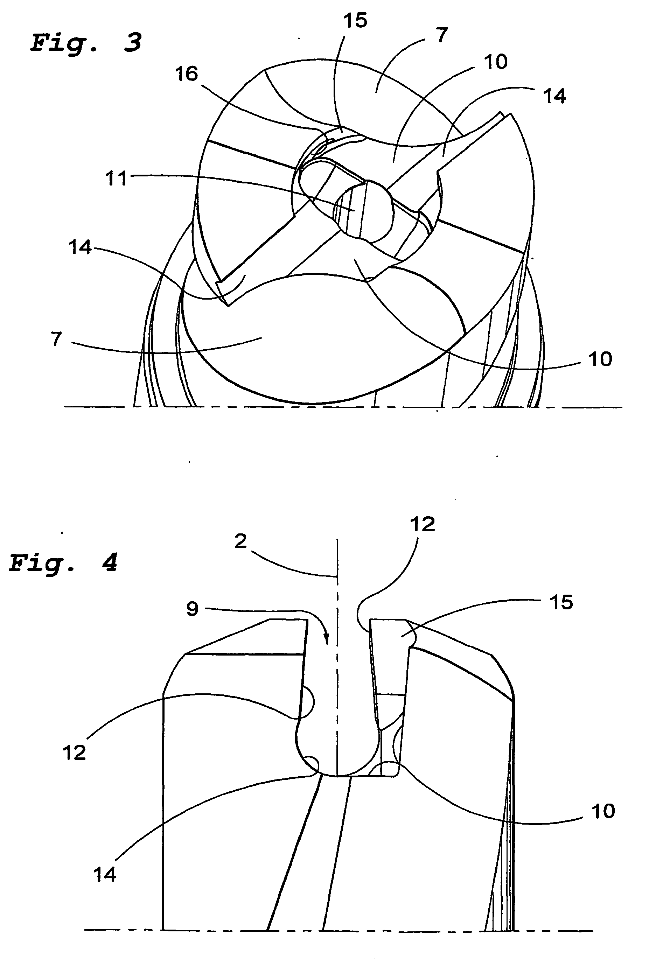

In Figs 2-4, a cutting seat 9 arranged in the drill body 1 is shown in more detail, the cutting seat 9 being arranged at the end of the drill body 1 which is turned from the shank 5. The cutting seat 9 of the drill body 1 comprises a plurality of different surfaces, which should co-operate to give a satisfactory support in an optimal way for the replaceable drill tip 3 when this is assembled in the cutting seat 9. Thus, the cutting seat 9 comprises two internal, first support surfaces 10 for the replaceable drill tip 3, the first support surfaces 10 having an extension transverse to the longitudinal direction of the drill. The first support surfaces 10 are situated diametrically opposite in respect to a central cooling duct 11 of the drill body 1. Radially outwards, the first support surfaces 10 are delimited by the chip channels 7.

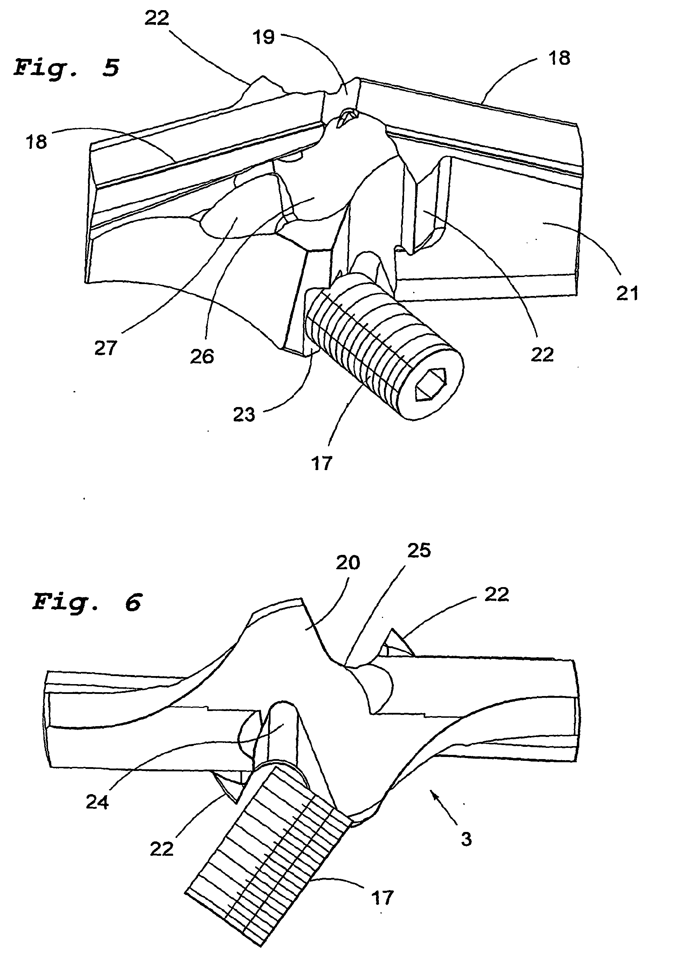

Furthermore, the cutting seat 9 comprises internal, second support surfaces 12 for the replaceable drill tip 3, said second support surfaces 12 forming an angle of approx. 5° to the rotation axis 2 of the drill, which also constitutes a longitudinal centre axis 2 for the drill and for the replaceable drill tip 3. As is most clearly seen in Fig 4, the second support surface 12 leans inwards towards the axis of rotation 2 in the direction of the open end of the cutting seat 9. The function of the second support surface 12 will be described in more detail below. A clearance surface 13 is situated radially inside each one of the second support surfaces 12, it is not intended that the clearance surface 13 should abut against the replaceable drill tip 3 when this is assembled correctly in the cutting seat 9, which thus has two clearance surfaces 13 which are situated diametrically opposite in respect of the central cooling duct 11. The clearance surfaces 13 are somewhat parallel displaced in relation to respective second support surface 12 in the direction away from the centre of the drill.

Furthermore, the cutting seat 9 comprises two curved surfaces 14 extending radially, which bridge on the one hand, the surfaces 12 and 13 and on the other hand the surface 10. The curved surfaces 14 are not intended to abut against the replaceable drill tip 3 when this is assembled in the cutting seat 9.

Furthermore, the cutting seat 9 comprises two internal, first circular cylindrical guide surfaces 15, which are situated diametrically opposite in respect to the central cooling duct 11. The internal, first circular cylindrical guide surfaces 15 join the clearance surfaces 13.

The drill body 1 has a hole 16 extending towards the centre of the drill body 1, the said hole extends from the outside of the drill body 1 and intersects one of the internal, first circular cylindrical guide surface 15. The radially extending hole 16 is intended to receive a locking screw 17, which is shown schematically in Fig 5 together with the replaceable drill tip 3. The hole 16 should be internally threaded while the locking screw 17 has an external thread.

The replaceable drill tip 3 is shown in Figs 5 and 6, the drill tip 3 having a generally elongated shape which fits into the cutting seat 9. Chip removing members in the form of two cutting edges 18 are arranged at the free end of the replaceable drill tip 3, as in the assembled state in the cutting seat 9, each and every one of which extends from opposite short sides of the replaceable drill tip 3 to a cutting tip 19 of the replaceable drill tip 3.

The replaceable drill tip 3 has a continuous, external, third support surface 20, see Fig 6, which is situated on the side of the replaceable drill tip 3 that is turned away from the cutting edges 18 for co-operation with the internal, first support surfaces 10 of the cutting seat 9.

The replaceable drill tip 3 also has two external, fourth support surfaces 21, which in the assembled state of the replaceable drill tip 3 are intended to come into abutment against the internal, second support surfaces 12 of the cutting seat 9. The external, fourth support surfaces 21 have, in that connection, in the assembled state of the replaceable drill tip 3, a corresponding inclination as the internal, second support surfaces 12 in relation to the longitudinal centre axis 2 of the drill. In the embodiment illustrated, this inclination is approx. 5°.

For co-operation with the internal, first circular cylindrical guide surfaces 15, the replaceable drill tip 3 has two external, second circular cylindrical guide surfaces 22, which in the assembled state of the replaceable drill tip 3 in the cutting seat 9 come into co-operation with the internal, first circular cylindrical guide surfaces 15.

The replaceable drill tip 3 also has a stop face 23 for the end of the locking screw 17 which comes into abutment against the replaceable drill tip 3 when the same is clamped in the cutting seat 9. The line of force of the locking screw 17 is besides the longitudinal centre axis 2 of the drill in order to provide rotation of the replaceable drill tip 3 when the same is assembled in the cutting seat 9, see below. Suitably, the line of force of the locking screw 17 forms an angle of approx. 30° having a radius which extending through the centre axis 2 and through the centre of the hole 16 where the hole 16 intersects the periphery of the tool body 1. In connection with the external, second circular cylindrical surfaces 22 of the replaceable drill tip 3, external, second and third cooling ducts 24 and 25 are arranged, the cooling duct 24 which is situated on the same side as the locking screw 17 having an increasing depth adjacent to the locking screw 17, in comparison with the cooling duct 25.

The replaceable drill tip 3 also has chip release surfaces 26, 27 in connection with the cutting edges 18 and the drill tip 19.

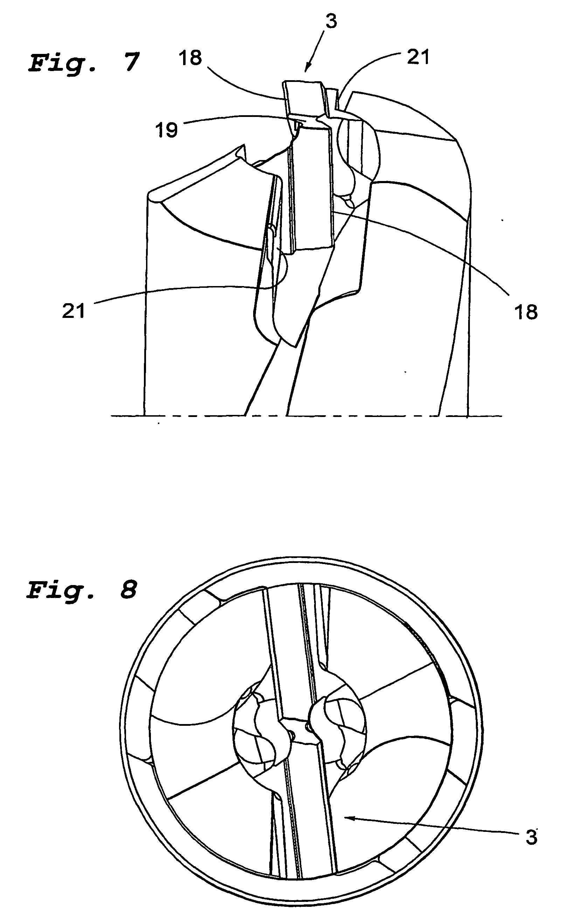

At the assembly of the replaceable drill tip 3 in the cutting seat 9, the replaceable drill tip 3 is clamped in the cutting seat 9 in the way which is shown in Figs 7 and 8, i.e. the external, third support surface 20 of the replaceable drill tip 3 abuts against the internal first support surfaces 10 of the cutting seat 9. In that connection, there has to be a certain tolerance between the internal, first circular cylindrical guide surfaces 15 of the cutting seat and the external, second circular cylindrical guide surfaces 22 of the replaceable drill tip 3. As is most clearly seen in Fig 7, the replaceable drill tip 3 is, during the initial stage of the assembly, not turned to the final position thereof but there is a play between the internal, second support surfaces 12 of the cutting seat 9 and the external, fourth support surfaces 21 of the replaceable drill tip 3. On turning of the replaceable drill tip 3 clockwise in Fig 8, the external fourth support surfaces 21 come into abutment against the respective internal, second support surfaces 12. The turning may either take place manually or by the locking screw 17 affecting the stop face 23 of the replaceable drill tip 3. In case manual turning is used, a follow-up tightening operation has to take place by means of the locking screw 17 in order to guarantee that a satisfactory abutment is established between the internal, second support surfaces 12 and the respective external, fourth support surfaces 21. It is advantageous that the internal, second support surfaces 12 in the radial direction are situated as far away as possible from the centre of the drill body 1. Thereby, a better torque is obtained for the support force, by which the internal, second support surfaces 12 effect the respective external, fourth support surfaces 21 of the replaceable drill tip 3.

At the turning of the replaceable drill tip 3 clockwise in Fig 8, also the internal, first circular cylindrical guide surfaces 15 will have a guiding co-operation with the respective external, second circular cylindrical guide surfaces 22, i.e. the replaceable drill tip 3 will rotate in respect of the longitudinal centre axis 2 of the drill according to the present invention.

On drilling with the drill according to the present invention, the cutting forces will effect the replaceable drill tip 3 in such a way that the same is pressed against the internal, second support surfaces 12. Once the drilling has started, the cutting forces provide a clamping and centring of the replaceable drill tip 3 in the cutting seat 9, on one hand by co-operation between the support surfaces 12 and 21 and on the other hand between the guide surfaces 15 and 22. At that stage, the locking screw 17 has in principle no significance for the clamping of the replaceable drill tip 3 in the cutting seat 9.

In this connection, it should be pointed out that in stage where the replaceable drill tip 3 is assembled in the cutting seat 9, there is in principle no contact between the replaceable drill tip 3 and the clearance surfaces 13 or the radial, curved surfaces 14.

The replaceable drill tip 3 according to the present invention is preferably made from cemented carbide, this being sintered in a first step. Then, grinding of the geometry of the replaceable drill tip 3 is carried out in a geometry-grinding fixture having high accuracy. Preferably, the external, fourth support surfaces 21 and the external second circular cylindrical guide surfaces 22 are sintered while grinding only is carried out of the cutting edges 18, the tip 19 and the external third support surface 20.

When a replaceable drill tip 3 is consumed, the locking screw 17 is loosened and a new replaceable drill tip 3 is assembled in the cutting seat 9.

It is general for the tool according to the present invention that the tip is manufactured from cemented carbide, ceramics or another comparatively hard material. The tool body is manufactured from a comparatively softer material, preferably steel.

The tool according to the present invention is preferably intended for chip removing machining of metal, but it is fully possible to use the tool also for other materials in which the tool works.

### Feasible Modifications of the Invention

In the above-described embodiment, the guide surfaces 15 and 22 are circular cylindrical while the support surfaces 12 and 21 lean at a certain angle in relation to the longitudinal centre axis 2 of the drill. However, within the scope of the present invention it is also possible that the guide surfaces 15 and 22 are slightly conical in relation to the longitudinal centre axis of the drill while the support surfaces 12 and 21 have an extension parallel to the longitudinal centre axis 2 of the drill. Then, co-operation between the conical guide surfaces 15 and 22 will clamp the replaceable drill tip 3 in the axial direction. In this case, the cone angle is suitably of the order of 10°. It is general for the guide surfaces 15 and 22 that they should be rotationally symmetrical in respect of the longitudinal centre axis 2 of the drill.

In the above-described embodiment, the support surfaces 12 and 21 have an inclination in relation to the longitudinal centre axis 2 of the drill of approx. 5°. However, the size of this inclination/angle can be varied within the scope of the present invention, at which in an exemplifying and not limiting aim it may mentioned that the angle should be greater than 0° and less than 10°, preferably between 2° and 8°. The angle in question has to be acute. The same is valid also in case when the co-operating guide surfaces of the cutting seat and the replaceable drill tip, respectively, are conically formed, at which in that case the cone angle should be greater than 5° and less than 15°.

## Claims

1. Rotatable tool having a replaceable tip (3) at the chip removing free end of the tool, the tool also comprising a tool body (1) having a cutting seat (9), in which the tip (3) is intended to be received, that the tool body (1) has helicoidal or straight chip channels (7), that the tip (3) has members (18) for chip removing machining, and that the cutting seat (9) and the replaceable tip (3) have mutually co-operating support surfaces (10, 12, 20, 21) extending both in the longitudinal direction of the tool and transversely to the longitudinal direction of the tool and that the cutting seat (9) and the replaceable tip (3) have mutually co-operating guide surfaces (15, 22), which are rotationally symmetrical in respect to a longitudinal centre axis (2) of the tool, **characterized in that** the cutting seat (9) and the replaceable tip (3) have co-operating support surfaces (12, 21) for clamping-the-replaceable-tip-(3), when the same is assembled in the cutting seat (9), in the axial direction of the tool, that these support surfaces (12, 21) extend mainly radially and form an acute angle with the longitudinal centre axis (2) of the tool, that a locking screw (17) is received in the tool body (1), and that the locking screw (17) brings the replaceable tip (3) by turning of the same around the longitudinal centre axis (2) of the tool to co-operate with the support surfaces (12, 21) for clamping the replaceable tip (3) in the axial direction of the tool.

2. Tool according to claim 2, **characterized in that** the acute angle is of the order of 5°.

3. Tool according to any one of claims 1 and 2, **characterized in that** the mutually co-operating guide surfaces (15, 22) are circular cylindrical.

4. Tool according to claim 1, **characterized in that** the members for providing axial clamping of the replaceable tip (3) in the cutting seat (9) consist of co-operating guide surfaces (15, 22) of the cutting seat (9) and the replaceable tip (3), respectively, and that said guide surfaces (15, 22) are conical in respect of the longitudinal centre axis (2) of the tool.

5. Tool according to claim 4, **characterized in that** the cone angle is of the order of 10°.

6. Tip (3) intended to be replaceably assembled in a cutting seat (9) in a tool body (1) at the chip removing free end of a rotatable tool, which tip (3) has members (18, 19) for chip removing machining as well as guide surfaces (22) which are rotationally symmetrical with regard to the longitudinal centre axis (2) of the tip (3) **characterized in that** the tip (3) has a stop face (23) which is radially displaced from the logitudinal centre axis (2) of the tip (3) and which is intended to co-operate with the locking screw (17) in order to provide rotation of the replaceable tip (3) and that said tip (3) support surfaces (20, 21) which are intended to co-operate with support surfaces (10, 12) of the cutting seat (9), when the tip (3) is assembled in the cutting seat (9), and that these support surfaces extend mainly radially and form an acute angle with the longitudinal centre axis (2) of the tip (3) when the tip is assembled in the cutting seat (9).

7. Tip according to claim 6, **characterized in that** the acute angle is of the order of 5°.

8. Tip (3) according to claim 6 or 7, **characterized in that** the guide surfaces (22) are circular cylindrical.

9. Tip (3) according to claim 6 or 7, **characterized in that** the guide surfaces are conical.

10. Tip (3) according to claim 9, **characterized in that** the cone angle is of the order of 10°.

## Patentansprüche

1. Drehbares Werkzeug mit einer austauschbaren Spitze (3) an dem spanenden freien Ende des Werkzeuges, wobei das Werkzeug weiterhin einen Werkzeugkörper (1) aufweist, der einen Schneidsitz (9) hat, in welchem die Spitze (3) aufgenommen werden soll, der Werkzeugkörper (1) schraubenförmige oder geradlinige Spankanäle (7) hat, die Spitze (3) Elemente (18) für eine spanende Bearbeitung hat und der Schneidsitz (9) und die austauschbare Spitze (3) wechselseitig zusammenwirkende Halteflächen (10, 12, 20, 21) aufweisen, die sich sowohl in Längsrichtung des Werkzeuges als auch quer zur Längsrichtung des Werkzeuges erstrecken, und wobei der Schneidsitz (9) und die austauschbare Spitze (3) wechselseitig miteinander zusammenwirkende Führungsflächen (15, 22) haben, die bezüglich einer Längsmittelachse (2) des Werkzeuges rotationssymmetrisch sind, **dadurch gekennzeichnet, daß** der Schneidsitz (9) und die austauschbare Spitze (3) miteinander zusammenwirkende Halteflächen (12, 21) haben für das Festklemmen der austauschbaren Spitze in axialer Richtung des Werkzeuges, wenn die Spitze in dem Schneidsitz (9) montiert ist, daß diese Halteflächen (12, 21) sich hauptsächlich in radialer Richtung erstrecken und einen spitzen Winkel mit der Längsmittelachse(2) des Werkzeugs bilden, daß eine Sicherungsschraube (17) in dem Werkzeugkörper (1) aufgenommen ist und daß die Sicherungsschraube (17) die austauschbare Spitze (3) durch Drehen derselben um die Längsmittelachse (2) des Werkzeuges dazu bringt, mit den Halteflächen (12, 21) zum Festklemmen der austauschbaren Spitze (3) in axialer Richtung des Werkzeuges zusammenzuwirken.

2. Werkzeug nach Anspruch 1, **dadurch gekennzeichnet, daβ** der spitze Winkel in der Größenordnung von 5° liegt.

3. Werkzeug nach einem der Ansprüche 1 oder 2, **dadurch gekennzeichnet, daß** die wechselseitig zusammenwirkenden Führungsflächen (15, 22) kreiszylindrisch sind.

4. Werkzeug nach Anspruch 1, **dadurch gekennzeichnet, daß** die Teile zum Bereitstellen einer axialen Klemmwirkung für die austauschbare Spitze (3) in dem Schneidsitz (9) aus zusammenwirkenden Führungsflächen (15, 22) des Schneidsitzes (9) bzw. der austauschbaren Spitze (3) bestehen, und daß die Führungsflächen (15, 22) bezüglich der Längsmittelachse (2) des Werkzeuges konisch sind.

5. Werkzeug nach Anspruch 4, **dadurch gekennzeichnet, daß** der Konuswinkel in der Größenordnung von 10° liegt.

6. Spitze (3) welche dafür vorgesehen ist, austauschbar in einem Schneidsitz (9) in einem Werkzeugkörper (1) an dem spanenden, freien Ende eines drehbaren Werkzeugs montiert zu werden, wobei die Spitze (3) Elemente (18, 19) für die spanende Bearbeitung ebenso wie Führungsflächen (22) hat, die bezüglich der Längsmittelachse (2) der Spitze (3) rotationssymmetrisch sind, **dadurch gekennzeichnet, daß** die Spitze (3) eine Anschlagfläche (23) hat, die von der Längsmittelachse (2) der Spitze (3) in radialer Richtung versetzt ist und die mit der Sicherungsschraube (17) zusammenwirken soll, um eine Drehung der austauschbaren Spitze (3) zu gewährleisten, und daß die Halteflächen (20, 21) der Spitze (3), die mit den Halteflächen (10, 12) des Schneidsitzes (9) zusammenwirken sollen, wenn die Spitze (3) in dem Schneidsitz (9) montiert ist, und daß diese Halteflächen sich im wesentlichen in radialer Richtung erstrecken und einen spitzen Winkel mit der Längsmittelachse (2) der Spitze (3) bilden, wenn die Spitze in dem Schneidsitz (9) montiert ist.

7. Spitze nach Anspruch 6, **dadurch gekennzeichnet, daß** der spitze Winkel in der Größenordnung von 5° liegt.

8. Spitze (3) nach Anspruch 6 oder 7, **dadurch gekennzeichnet, daß** die Führungsflächen (22) kreiszylindrisch sind.

9. Spitze (3) nach Anspruch 6 oder 7, **dadurch gekennzeichnet, daß** die Führungsflächen konisch sind.

10. Spitze (3) nach Anspruch 9, **dadurch gekennzeichnet, daß** der Konuswinkel in der Größenordnung von 10° liegt.

## Revendications

1. Outil rotatif comportant une pointe interchangeable (3) au niveau de l'extrémité libre d'enlèvement de copeaux de l'outil, l'outil comprenant également un corps d'outil (1) ayant un siège de coupe (9), dans lequel la pointe (3) est destinée à être reçue, le corps d'outil (1) a des canaux hélicoïdaux ou droits pour copeaux (7), la pointe (3) a des éléments (18) pour l'usinage d'enlèvement de copeaux, et le siège de coupe (9) et la pointe interchangeable (3) ont des surfaces de support coopérant réciproquement (10, 12, 20, 21) s'étendant à la fois dans la direction longitudinale de l'outil et transversalement à la direction longitudinale de l'outil et le siège de coupe (9) et la pointe interchangeable (3) ont des surfaces de guidage coopérant réciproquement (15, 22), qui sont symétriques de manière rotationnelle par rapport à un axe central longitudinal (2) de l'outil, **caractérisé en ce que** le siège de coupe (9) et la pointe interchangeable (3) ont des surfaces de support coopérant (12, 21) pour brider la pointe interchangeable (3) lorsque celle-ci est assemblée dans le siège de coupe (9), dans la direction axiale de l'outil, ces surfaces de support (12, 21) s'étendent principalement radialement et forment un angle aigu avec l'axe central longitudinal (2) de l'outil, une vis de verrouillage (17) est reçue dans le corps de l'outil (1), et la vis de verrouillage (17) amène la pointe interchangeable (3) en la faisant tourner autour de l'axe central longitudinal (2) de l'outil pour coopérer avec les surfaces de support (12, 21) pour brider la pointe interchangeable (3) dans la direction axiale de l'outil.

2. Outil selon la revendication 1, **caractérisé en ce que** l'angle aigu est de l'ordre de 5°.

3. Outil selon l'une quelconque des revendications 1 et 2, **caractérisé en ce que** les surfaces de guidage coopérant réciproquement (15, 22) sont cylindriques circulaires.

4. Outil selon la revendication 1, **caractérisé en ce que** les éléments pour assurer le bridage axial de la pointe interchangeable (3) dans le siège de coupe (9) se composent de surfaces de guidage coopérant (15, 22) de respectivement le siège de coupe (9) et de la pointe interchangeable (3), et lesdites surfaces de guidage (15, 22) sont coniques par rapport à l'axe central longitudinal (2) de l'outil.

5. Outil selon la revendication 4, **caractérisé en ce que** l'angle du cône est de l'ordre de 10°.

6. Pointe (3) destinée à être assemblée de manière interchangeable dans un siège de coupe (9) dans un corps d'outil (1) à l'extrémité libre d'enlèvement de copeaux d'un outil rotatif, ladite pointe (3) a des éléments (18, 19) pour l'usinage par enlèvement de copeaux ainsi que des surfaces de guidage (22) qui sont symétriques de manière rotationnelle par rapport à l'axe central longitudinal (2) de la pointe (3), **caractérisée en ce que** la pointe (3) a une face de butée (23) qui est déplacée radialement par rapport à l'axe central longitudinal (2) de la pointe (3) et qui est destinée à coopérer avec la vis de verrouillage (17) pour assurer la rotation de la pointe interchangeable (3) et lesdites surfaces de support (20, 21) de la pointe (3) sont destinées à coopérer avec les surfaces de support (10, 12) du siège de coupe (9), lorsque la pointe (3) est assemblée dans le siège de coupe (9), et ces surfaces de support s'étendent principalement radialement et forment un angle aigu avec l'axe central longitudinal (2) de la pointe (3) lorsque la pointe est assemblée dans le siège de coupe (9).

7. Pointe selon la revendication 6, **caractérisé en ce que** l'angle aigu est de l'ordre de 5°.

8. Pointe (3) selon la revendication 6 ou 7, **caractérisée en ce que** les surfaces de guidage (22) sont cylindriques circulaires.

9. Pointe (3) selon la revendication 6 ou 7, **caractérisée en ce que** les surfaces de guidage sont coniques.

10. Pointe (3) selon la revendication 9, **caractérisée en ce que** l'angle du cône est de l'ordre de 10°.
